Europäisches Patentamt

European Patent Office

Office européen des brevets

(19)

(11) Veröffentlichungsnummer: **0 212 506**
A2

# (12) EUROPÄISCHE PATENTANMELDUNG

(21) Anmeldenummer: 86111006.2

(22) Anmeldetag: 08.08.86

(51) Int. Cl.⁴: **G 06 K 19/06**

(30) Priorität: 09.08.85 DE 3528686

(43) Veröffentlichungstag der Anmeldung: 04.03.87
Patentblatt 87/10

(84) Benannte Vertragsstaaten: AT BE CH DE FR GB IT LI LU NL SE

(71) Anmelder: Oldenbourg, R., Graphische Betriebe GmbH
Rosenheimer Strasse 145, D-8000 München 80 (DE)

(72) Erfinder: **von Waldburg, Ferdinand Graf,**
**Schwanenweg 23, D-8000 München 82 (DE)**
Erfinder: **Badem, Helmut, Raffoltstrasse 21,**
**D-8069 Schweitenkrichen (DE)**
Erfinder: **Königer, Walter, Waldtruderinger Strasse 58,**
**D-8000 München 82 (DE)**

(74) Vertreter: **Patentanwälte Grünecker, Kinkeldey,**
**Stockmair & Partner, Maximilianstrasse 58,**
**D-8000 München 22 (DE)**

(54) **Verfahren zum Herstellen einer Ausweiskarte und Ausweiskarte.**

(57) Die Erfindung betrifft ein Verfahren zum Herstellen einer Ausweiskarte mit einem einen Kontaktbereich aufweisenden flächigen Träger, an dem ein IC-Baustein befestigt ist, wobei mehrere überwiegend aus einem Thermoplast, wie PVC, bestehende Schichten eines Schichtaufbaus unter Druck und Temperatur miteinander verschweißt werden und wobei der Träger mit dem IC-Baustein von einer Breitseite des Schichtaufbaus in aufeinander ausgerichtete Ausschnitte in den Schichten eingebracht wird. Der bekannten Verfahren anhaftende Nachteil eines hohen Material- und fertigungstechnischen Aufwands wird erfindungsgemäß dadurch vermieden, daß der Träger mit dem IC-Baustein im kleiner als der Träger ausgebildeten Ausschnitt der obersten Deckschicht positioniert wird, und daß beim anschließenden Verschweißen unter Druck und Temperatur der Träger mit dem IC-Baustein voran durch den Ausschnitt der obersten Deckschicht hindurch in den Schichtaufbau und bis in einen in einer Inlett-Schicht vorgesehenen Ausschnitt in der Größe des Trägers eingepreßt und eingebettet wird, bis die Kontakte an der Oberfläche des Trägers mit der Oberfläche der obersten Deckschicht abschließen oder geringfügig darunterliegen.

ACTORUM AG

EP 3081-25/Sü

**Beschreibung**

Die Erfindung betrifft ein Verfahren der im Gattungsbegriff des Patentanspruchs 1 angegebenen Art.

Bei einem aus der DE-OS 32 48 385 bekannten Verfahren wird der mit dem IC-Baustein verbundene Träger mit einer den Kontaktbereich aufweisenden Folie in einem Vorbereitungsschritt verbunden und dann als vorgefertigte Einheit in eine von mehreren aufeinander ausgerichteten Ausschnitten des Schichtaufbaus gebildete Vertiefung eingelegt, die größer und tiefer als der Träger ist. Die am Träger befestigte Folie wird dann zunächst durch Schweissen angehaftet, ehe die Ausnehmung, in der der Träger und der IC-Baustein liegen, mit einem vernetzbaren Kunststoff ausgefüllt wird. Daraufhin erst wird der Schichtaufbau verschweißtbis der Träger mit dem IC-Baustein eingebettet ist. In der auf diese Weise hergestellten Ausweiskarte bildet der Träger mit dem IC-Baustein und der vernetzten Ummantelung sozusagen einen Fremdkörper, der beim Biegen den Ausweiskarte verhältnismäßig rasch aus dem Verbund lösbar ist. Von besonderem Nachteil ist bei diesem bekannten Verfahren jedoch der Material- und verfahrenstechnisch große Aufwand, weil die einzelnen Schichten des Schichtaufbaus sorgfältig ausgewählt werden müssen, weil die am Träger zu befestigende Folie ein spezieller Typ sein und gegebenenfalls mit einem Kleber beschichtet werden muß und weil der vernetzbare Thermoplast teuer und schwierig zuzubereiten ist, während die einzelnen Verfahrensstufen voneinander getrennt und in getrennten Einrichtungen durchzuführen sind.

Es ist ferner aus der DE-AS 29 20 012 ein Verfahren bekannt, bei dem in eine vorgeformte Ausnehmung der Inlett- oder Kernschicht eines Schichtaufbaus der auf spezielle Weise vorgefertigte Träger mit dem IC-Baustein eingelegt und dann durch die beiden Deckfolien des Schichtaufbaus lagegesichert wird, wenn diese an der Inlettschicht kalt angeklebt werden. Abgesehen davon, daß bei diesem Verfahren die korrekte Positionierung und Zentrierung des Trägers mit dem IC-Baustein schwierig ist, werden beim Biegen der fertigen Ausweiskarte lokale Bereiche der beiden Deckfolien besonders stark beansprucht.

Der Erfindung liegt die Aufgabe zugrunde, ein Verfahren der eingangs genannten Art zu schaffen, das unter weitgehender Verwendung von für die Scheckkartenherstellung üblicher Werkstoffe und Arbeitsverfahren auch für sogenannte Chip-Karten mit vertretbarem Material- und verfahrenstechnischem Aufwand anwendbar ist, und mit dem gegen die beim Gebrauch üblichen Biegebelastungen widerstandsfähige Chip-Karten herstellbar sind, in denen der Träger mit dem IC-Baustein korrekt positioniert und lagegesichert ist.

Die gestellte Aufgabe wird erfindungsgemäß durch die im kennzeichnenden Teil des Patentanspruchs 1 angegebenen Merkmale gelöst.

Zur Herstellung der Ausweiskarten eignen sich bei diesem Verfahren auch für die Scheckkartenherstellung übliche Materialien, d.h. Schichten, die nur durch Ausschneiden oder Ausstanzen der Ausschnitte vorzubereiten sind. An der obersten Deckschicht, die in der Regel als Bogen für eine Vielzahl von gleichzeitig herzustellenden Ausweiskarten vorliegt, lassen sich entsprechend viele Träger mit den daran angeordneten IC-Bausteinen vorbereitend positionieren, worauf der Bogen wie üblich auf die anderen Schichten des Schichtenaufbaus aufgelegt wird, ehe mit dem Verschweißen unter Druck und Temperatur begonnen wird. Die Träger mit den IC-Bausteinen haben dann exakt die gewünschte Lage für jede Ausweiskarte und werden beim Verschweißen in den Schichtaufbau hineingedrückt und in das thermoplastische Material eingebettet. Jeder Träger wird mit seinem IC-Baustein voran durch den Ausschnitt der Deckschicht hindurch gepreßt, bis der Träger in dem passenden Ausschnitt einer darunterliegenden Schicht sitzt. Das beim Einpressen verdrängte Material um den Ausschnitt der obersten Deckschicht wird dann nicht mehr zum Positionieren gebraucht, sondern zunächst nach unten verdrängt, bis gegen Ende des Verschweißvorganges auch die obenliegenden Ränder des Trägers in das Material eingebettet sind. Der gegen lokale Druckbeanspruchung empfindliche IC-Baustein wird bei dieser Verdrängung kaum beaufschlagt, sondern dringt praktisch widerstandslos in die darunterliegenden Ausschnitte weiterer Schichten des Schichtaufbaus ein. Da auch die oberste Deckschicht voll mit den anderen Schichten des Schichtaufbaus verschweißt ist, wird der Träger sehr widerstandsfähig eingebettet, so daß er auch bei häufigem Biegen der Ausweiskarte nicht aus dem Verbund gelöst werden kann. Der Kontaktbereich liegt trotzdem in gewünschter Weise frei. Die beim Einpressen des Trägers mit dem IC-Baustein auftretenden Fließwiderstände nimmt der Träger auf, der dafür ausreichend formstabil ist.

Ein weiteres, wichtiges Merkmal geht aus Anspruch 2 hervor. Durch diese Dimensionierung der Ausschnitte wird erreicht, daß nur eine genau vorherbestimmte Menge des thermoplastischen Materials im Schichtaufbau verdrängt wird, so daß in der fertigen Ausweiskarte keine sichtbaren Verzerrungen oder Risse entstehen und trotzdem die Ränder des Trägers zuverlässig von dem verdrängten Material überdeckt werden, was seiner Halterung im Schichtaufbau zugute kommt.

Ein weiteres, wichtiges Verfahrensmerkmal geht aus Anspruch 3 hervor. Der wärmeaktivierbare Kleber hat zunächst die Aufgabe, den Träger mit dem IC-Baustein in
dem die genaue Position des Trägers festlegenden Ausschnitt der obersten Deckschicht so lange festzulegen,
bis der Träger in den Schichtaufbau eingepreßt wird. Danach wird er dank seiner Wärmeaktivierbarkeit über die
Oberfläche des Trägers und des IC-Bausteins so weit gleichmäßig verteilt, daß er überall dort eine Haftung zum umgebenden und verdrängten Thermoplastmaterial herstellt,
wo dieses mit dem Träger und dem IC-Baustein in Kontakt
kommt.

Zweckmäßig wird dabei gemäß Anspruch 4 vorgegangen, wobei
sich in der Praxis drei Klebertropfen ausreichend erweisen. Die Klebertropfen werden dabei so am IC-Baustein
bzw. an dessen Vergußmasse angebracht, daß der Kleber am
Rand oder im Inneren des Ausschnittes der obersten Deckschicht haftet und dann beim Einpressen unter Einfluß von
Druck und Temperatur die gesamte Oberfläche überzieht.

Eine genaue Positionierung oder Zentrierung des Trägers
vor dessen Einpressen in den Schichtaufbau wird gemäß
Anspruch 5 erreicht, wobei der Größenunterschied zwischen
dem Ausschnitt und der Größe des Trägers eine bestimmte
Menge an zu verdrängendem Thermoplast der obersten Deckschicht bestimmt, die dann zum allseitigen und haltbaren
Einbetten des Trägers benutzt wird, wenn dieser tiefer
in den Schichtaufbau eingepreßt ist.

Ein weiterer, wichtiger Gesichtspunkt ist in Anspruch 6
enthalten. Die in den zwei weiteren Schichten vorgesehenen Ausschnitte vermeiden lokale Druckkräfte am IC-Baustein, weil dieser beim Einpressen des Trägers sozusagen widerstandslos in die Ausschnitte eintaucht. Da die Ausschnitte etwa die Größe des IC-Bausteines haben, ist um den eingetauchten IC-Baustein kein nennenswerter Spalt vorhanden, in den das thermoplastische Material fließen könnte, was den Vorteil hat, daß an der fertigen Ausweiskarte keine Verzerrungen oder Risse durch die Fließbewegung sichtbar sind.

Zweckmäßig ist ferner das Merkmal von Anspruch 7, weil eine Papierschicht die Fälschungssicherheit der Ausweiskarte erheblich erhöht (durch Wasserzeichen und den starken Verbund mit den Thermoplasten), wobei durch den Ausschnitt in der Papierschicht sichergestellt ist, daß diese beim Einpressen des Trägers und Eintauchen des IC-Bausteines nicht verformt oder zerrissen wird, weil solche Deformationen dann von außen an der Ausweiskarte störend sichtbar wären.

Die Erfindung ist zweckmäßigerweise weiterhin auf eine Ausweiskarte gemäß Anspruch 8 gerichtet, die einen Schichtaufbau aus miteinander verschweißten, überwiegend aus einem Thermoplasten (wie PVC) bestehenden Schichten aufweist, und bei der in Ausschnitten des Schichtaufbaus ein Träger haftend eingebettet ist, an dem oberseitig ein von außen zugänglicher Kontaktbereich und unterseitig ein IC-Baustein angebracht sind. Durch das Einpressen des Trägers mit dem IC-Baustein durch einen an sich kleineren Ausschnitt in der obersten Deckschicht in einen zum Träger passenden Ausschnitt wird eine allseits sehr haltbare Einbettung des Trägers mit dem IC-Baustein erreicht. Da der Schichtaufbau nicht um den Träger und den IC-Baustein herum zusammengestellt werden muß, läßt sich die Ausweiskarte sehr einfach mit hoher reproduzierbarer Genauigkeit herstellen, was insbesondere für eine Massenproduktion wichtig ist.

Eine zweckmäßige Ausführungsform einer solchen Ausweiskarte geht weiterhin aus Anspruch 9 hervor. Dieser Schichtaufbau führt zu einer hochbelastbaren und verschleißfesten Ausbildung der Ausweiskarte, in der der Träger mit dem IC-Baustein sehr haltbar integriert ist.

Zweckmäßig ist ferner die Ausführung von Anspruch 10, weil die Papierschicht im Schichtaufbau die Fälschungssicherheit erheblich erhöht, wobei dafür Sorge getragen ist, daß die Papierschicht beim Einpressen des Trägers nicht zerstört oder verzerrt wird.

Schließlich ist es aus herstellungstechnischen Gründen zweckmäßig, die Merkmale von Anspruch 11 vorzusehen, weil damit einerseits eine genau bestimmbare Thermoplastmasse zum Einbetten des Trägers verdrängt und andererseits der IC-Baustein zur anderen Seite der Ausweiskarte zuverlässig abgepolstert ist.

Anhand der Zeichnungen wird nachstehend das erfindungsgemäße Verfahren anhand einer Ausführungsform einer Ausweiskarte erläutert. Es zeigen:

Fig. 1 eine schematische Ansicht einer Breitseite einer Ausweiskarte,

Fig. 2 die einzelnen Komponenten vor der Herstellung der Ausweiskarte, und

Fig. 3 einen Schnitt durch einen Teil der fertigen Ausweiskarte.

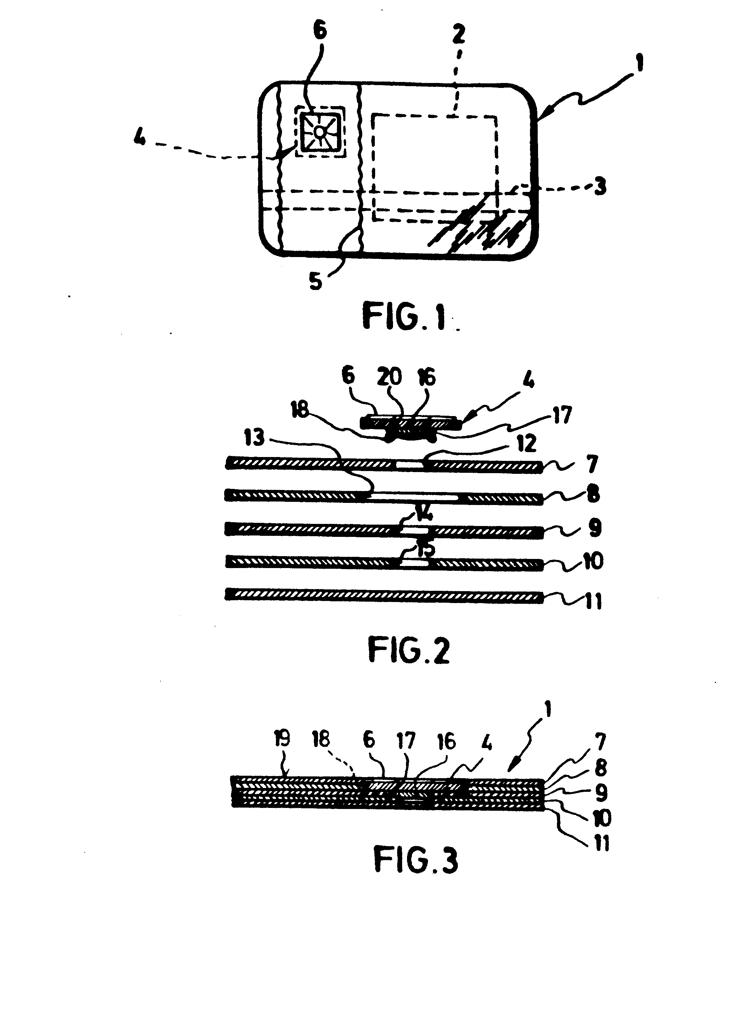

In Fig. 1 ist eine sogenannte Chip-Karte, d.h. eine Ausweiskarte 1, erkennbar, die an einer Breitseite ein Feld 2 mit benutzer- oder inhaberspezifischen Daten sowie einen mit einem Code versehenen Magnetstreifen 3 trägt. Neben dem Feld 2 ist in die Ausweiskarte 1 ein strichliert angedeuteter Träger 4 mit einem nicht-dargestellten IC-Baustein integriert, wobei der Träger 4 einen an der Breitseite der Ausweiskarte 1 zugänglichen Kontaktbereich 6 darbietet. Der Träger 4 ist so weit in die Ausweiskarte 1 eingebettet, daß von ihm nur der Kontakbereich 6 freiliegt. Ferner kann die Ausweiskarte 1 mit Wasserzeichen oder sonstigen Markierungen versehen sein.

Aus Fig. 2 und 3 ist erkennbar, wie die Ausweiskarte 1 gemäß Fig. 1 hergestellt wird. Sie besteht aus einem Schichtaufbau aus im vorliegenden Ausführungsbeispiel fünf Schichten 7,8,9,10 und 11, von denen die Schichten 7,8,10 und 11 ein Thermoplast wie PVC, sein kann, während die Schicht 9 eine Papierschicht ist. Anstelle der Schicht 9 könnte jedoch auch eine weitere Thermoplastschicht vorgesehen sein. Die oberste und die unterste Deckschicht 7,11 sind doppelt so dick, wie die anderen Deckschichten, beispielsweise 0,2 mm. Die oberen vier Schichten 7,8,9,10 sind mit senkrecht zur Hauptebene der Ausweiskarte ausgerichteten Ausschnitten 12,13,14 und 15 ausgestattet, die zweckmäßigerweise ausgeschnitten oder ausgestanzt sind.

Der Träger 4, an dem der IC-Baustein 16 unterseitig angebracht und gegebenenfalls mit einer Vergußmasse 17 (Araldit) geschützt lagegesichert ist, trägt oberseitig den Kontaktbereich 6, der entweder erhaben ist oder auch mit der Oberseite des Trägers 4 abschließen kann. Der Kontaktbereich 6 erstreckt sich zweckmäßigerweise nicht bis zu den Rändern des Trägers 4, sondern endet umlaufend in einem Abstand von den Rändern. Die Kontakverbindungen 20 verbinden den Kontaktbereich 6 mit dem IC-Baustein 16, wobei im Kontaktbereich 6 voneinander getrennte Kontaktzonen (s.Fig.1) vorliegen.

Die Größe und Form des Ausschnittes 12 in der obersten Deckschicht 7 sind auf die Größe und Form des IC-Bausteins 16 derart abgestimmt, daß dieser genau in den Ausschnitt 12 paßt. Der Ausschnitt 13 in der darunterliegenden Schicht 8 ist hingegen genau auf die Form und Größe des Trägers 4 abgestimmt. Die Ausschnitte 14 und 15 in den Schichten 9 und 10 haben wieder annähernd die Größe des Ausschnittes 12.

Wie in Fig. 2 angedeutet ist, sind Tropfen 18 eines Klebers am IC-Baustein 16 bzw. der Vergußmasse 17 angebracht, mit denen der Träger 4 in den Ausschnitt 12 der Schicht 7 positioniert und zentriert wird, ehe die Schicht 7 auf die anderen Schichten 8 bis 11 des Schichtaufbaus aufgelegt wird. Zweckmäßigerweise werden drei Klebertropfen 18 verteilt vorgesehen. Die Klebertropen 18 könnten auch am Rand des Ausschnittes 12 angeordnet sein. Der Kleber ist ein wärmeaktivierbarer Kleber, der in der Lage ist, eine haltbare Verbindung zwischen dem Thermoplast der Schichten 7 bis 11 und dem an sich nicht mit dem Thermoplasten zu verbindenden Träger 4 bzw. der Vergußmasse 17 und dem IC-Baustein 16 herzustellen. Zur Herstellung der Ausweiskarte 1 gemäß Fig. 1 wird die Schicht 7 mit dem daran positionierten Träger 4 auf die bereits vorbereiteten und aufeinandergelegten Schichten 8,9,10 und 11 aufgelegt, ehe der Schichtaufbau unter Einwirkung von Druck und Temperatur miteinander verschweißt wird. Unter der Einwirkung der Temperatur wird der Thermoplast der Schichten zunächst plastisch, ehe unter dem Einfluß des Druckes der Träger 4 mit dem IC-Baustein 16 voran durch den Ausschnitt 12 hindurch gedrückt wird, bis der Träger 4 schließlich im Ausschnitt 13 sitzt. Der dabei verdrängte Thermoplast fließt um die Ränder des Trägers 4 herum und bis zum Kontaktbereich 6 hin, ohne ihn zu bedecken. Der IC-Baustein 16 taucht in die Ausnehmungen 14,15 ein, ohne dabei wesentlichen Druckbeanspruchungen ausgesetzt zu werden. Unter der Einwirkung der Temperatur wird der Kleber 18 aktiviert und verteilt sich (Fig.3 strichliert angedeutet) über die Oberfläche des Trägers, des IC-Bausteines 16 und der Vergußmasse 17, so daß der plastische Thermoplast des Schichtaufbaus eine innige Verbindung mit dem Träger und dem IC-Baustein eingeht. Insbesondere in dem Bereich, in dem der Thermoplast des Schichtaufbaus die oberen Ränder des Träger 4 überdeckt, wird eine gute Haftung erreicht, die einem nachträglichen Herauslösen des Trägers 4 aus dem Schichtaufbau bei Biegungen der Ausweiskarte entgegenwirkt. Die Halterung des Trägers 4 ist besonders wirksam, weil nicht nur der Kleber 18 eine Verbindung herstellt, sondern auch die Deckschicht 7 mit der anderen Schicht 8 vollflächig verschweißt wird.

Da der Thermoplast des Schichtaufbaus den Träger weitgehend einhüllt und damit einbettet, könnte der Kleber 18 auch nur dazu verwendet werden, den Träger 4 mit dem IC-Baustein vor dem Verschweißen im Ausschnitt 12 lagezusichern, ohne sich dann in größerem Maß über die Oberfläche zu verteilen. Eine ausreichende Haltbarkeit gegen Herauslösen des Trägers wäre auch dann gegeben. Das von den Ausschnitten 12,13,14 und 15 begrenzte Volumen entspricht höchstens dem gesamten Verdrängungsvolumen des Trägers 4 mit dem IC-Baustein 16 und dessen Vergußmasse 17, so daß bis auf den Randbereich um den Ausschnitt 12 keine größeren Fließbewegungen des Thermoplasts im Schichtaufbau eintreten. Auch die Papierschicht 9 bleibt dadurch geschont, so daß sie weder verzerrt noch gerissen wird.

GRÜNECKER, KINKELDEY, STOCKMAIR & PARTNER

PATENTANWÄLTE
EUROPEAN PATENT ATTORNEYS

A GRÜNECKER DIPL-ING
DR H KINKELDEY DIPL-ING
DR W STOCKMAIR DIPL-ING AE E ICALTECH
DR K SCHUMANN DIPL-PHYS
P H JAKOB DIPL-ING
DR G BEZOLD DIPL-CHEM
W MEISTER DIPL-ING
H HILGERS DIPL-ING
DR H MEYER-PLATH DIPL-ING
DR M BOTT-BODENHAUSEN* DIPL-PHYS
DR U. KINKELDEY DIPL-BIOL

*LICENCE EN DROIT DE L UNIV DE GENEVE

8000 MÜNCHEN 22
MAXIMILIANSTRASSE 58

R. Oldenbourg

Graphische Betrieb GmbH

Rosenheimerstraße 145

8000 München 80

EP 3081-25/Sü

9.08.1986

# Verfahren zum Herstellen einer Ausweiskarte und Ausweiskarte

## Patentansprüche

1. Verfahren zum Herstellen einer Ausweiskarte mit einem einen Kontaktbereich aufweisenden flächigen Träger, an dem ein IC-Baustein befestigt ist, wobei mehrere überwiegend aus einem Thermoplast, wie PVC, bestehende Schichten eines Schichtaufbaus unter Druck und Temperatur miteinander verschweißt werden und wobei der Träger mit dem IC-Baustein von einer Breitseite des Schichtaufbaus in aufeinander gerichtete Ausschnitte in den Schichten eingebracht und festgelegt wird, d a d u r c h  g e k e n n z e i c h - n e t , daß der Träger mit dem IC-Baustein im kleiner als der Träger ausgebildeten Ausschnitt der obersten Deckschicht positioniert wird, und daß beim anschließenden Verschweißen unter Druck und Temperatur der Träger mit dem IC-Baustein voran durch den Ausschnitt der obersten Deckschicht hindurch in den Schichtaufbau und bis in einen in einer Inlett-Schicht vorgesehenen Ausschnitt in der Größe des Trägers eingepreßt und eingebettet wird, bis die Kontakte an der Oberfläche des Trägers mit der Oberfläche der obersten Deckschicht abschließen oder geringfügig darunterliegen.

2. Verfahren nach Anspruch 1, d a d u r c h  g e -
k e n n z e i c h n e t , daß die Ausschnitte in den
Schichten des Schichtenaufbaus in ihren Größen so bemessen werden, daß das Gesamtvolumen der Ausschnitte höchstens dem Verdrängungsvolumen des Trägers mit dem IC-Baustein entspricht.

3. Verfahren nach den Ansprüchen 1 und 2, d a -
d u r c h  g e k e n n z e i c h n e t , daß der Träger mit dem IC-Baustein mittels eines wärmeaktivierbaren
Klebers im Ausschnitt der obersten Deckschicht positioniert und zentriert wird, und daß der Kleber beim Verschweißen der Schichten über die Oberfläche des Trägers
und des IC-Bausteins verteilt wird und sich mit dem Material der Schichten verbindet.

4. Verfahren nach Anspruch 3, d a d u r c h  g e -
k e n n z e i c h n e t , daß zum Zentrieren und Positionieren mehrere Klebertropfen am Träger und/oder dem,
vorzugsweise mit einer Vergußmasse,wie Araldit, am Träger
befestigten IC-Baustein angebracht werden, ehe der Träger
mit dem IC-Baustein im Ausschnitt der obersten Deckschicht
angehaftet wird.

5. Verfahren nach den Ansprüchen 1 bis 4, d a -
d u r c h  g e k e n n z e i c h n e t , daß der Ausschnitt in der obersten Deckschicht mit    annähernd
dem Umriß des IC-Bausteins entsprechendem Format gebildet
wird.

6.    Verfahren nach den Ansprüchen 1 bis 5, d a -
d u r c h   g e k e n n z e i c h n e t , daß in Einpreßrichtung  des Trägers unter der Inlett-Schicht zwei
weitere Schichten vorgesehen werden, deren jede  einen
Ausschnitt in etwa der Größe des IC-Bausteins besitzt,
und daß unter diese beiden Schichten  eine durchgehende
unterste Deckschicht gelegt wird.

7.    Verfahren nach den Ansprüchen 1 bis 6, d a -
d u r c h   g e k e n n z e i c h n e t , daß die der
Inlett-Schicht unterseitig benachbarte Schicht eine Papierschicht ist.

8.    Ausweiskarte mit einem Schichtaufbau aus untereinander verschweißten, überwiegend aus einem Thermoplast,
wie PVC, bestehenden Schichten und mit einem in Ausschnitte (12-15)
des Schichtaufbaus haftend eingebetteten Träger (4), an dem oberseitig
ein von außen zugänglicher Kontaktbereich (6) und unterseitig ein
IC-Baustein (16) angebracht sind, d a -
d u r c h   g e k e n n z e i c h n e t , daß der Träger (4) mit dem IC-Baustein (16) von einer Breitseite
(19) des Schichtaufbaus durch einen gegenüber dem Träger
kleineren Ausschnitt (12) in der obersten Deckschicht (7)
bis in einen dem Träger in der Größe angepaßten Ausschnitt
(13) in den erweichten Schichtaufbau eingepreßt und in
den Thermoplast eingebettet ist, gegebenenfalls unter
Vermittlung eines den Träger (4) mit    Thermoplast
verbindenden Klebers (18).

9.    Ausweiskarte nach Anspruch 8, d a d u r c h   g e-
k e n n z e i c h n e t , daß der Schichtaufbau aus
fünf Schichten (7 bis 11) besteht, von denen die oberen
vier Schichten (7 bis 10) mit vorgeformten Ausschnitten
(12 bis 15) versehen sind, die ein Gesamtvolumen begrenzen, das höchstens dem Volumen des Trägers (4) mit dem
IC-Baustein (16) und dessen Vergußmasse (17) entspricht.

10.    Ausweiskarte nach den Ansprüchen 8 und 9,  d a - d u r c h   g e k e n n z e i c h n e t ,  daß unterhalb der zweiten, den Ausschnitt (13) in der Größe des Trägers (4) aufweisenden Schicht (8) eine Papierschicht (9) mit einem den Umriß des IC-Bausteins (16) in Form und Größe entsprechenden Ausschnitt (14) vorgesehen ist.

11.    Ausweiskarte nach den Ansprüchen 8 bis 10,  d a - d u r c h   g e k e n n z e i c h n e t ,  daß die oberste und die unterste Deckschicht (7,11) doppelt so dick sind wie die anderen Schichten (8,9,10).

FIG.1

FIG.2

FIG.3